# EUROPEAN PATENT APPLICATION

(11) **EP 1 333 387 A1**
(43) Date of publication of application: **06.08.2003**
(21) Application number: 02002652.2
(22) Date of filing: 05.02.2002
(51) Int. Cl.: G06F 17/30

(54) **A method of data refreshing of a mark-up language document**

(71) Applicant: SIEMENS AKTIENGESELLSCHAFT, 80333 München (DE)
(72) Inventor: Carlucci, Claudio, 16100 Genova (IT); Corsini, Giorgio, 16148 Genova (IT)

(57) **Abstract**

The invention relates to a method of data refreshing and to a server computer comprising
- server script code means (50) for generating of client script code,
- means (36) for placing of the client script code and information descriptive of the new data in a hidden frame (48),
- means (36) for sending of the hidden frame to the client computer for executing of the client script code in order to update a mark-up language document, which has been loaded on the client computer.

## Description

### Field of invention

The present invention relates to the field of data refreshing, and more particularly to refreshing of a mark-up language document on a client computer.

### Background and prior art

Remote monitoring and control of systems and processes have taken many forms. In the past, dedicated lines became the most common form of communication between a control system and a remote location.

This has limited application since the control system was not accessible from multiple locations. Modems have made it possible to access the control system from different locations, but these types of systems are generally restricted to downloading and uploading data files. Providing any type of control function between locations is rather limited in this type of environment. Further, an end user generally required a customized interface to access the control system.

With the growth of Internet, and its World Wide Web providing a delivery platform for organizing Internet data through hypertext links, a client server system can be designed that will give each end user the same type of a user friendly interface with the same universal access to services on the Web. The Web is a network of documents called sites or pages stored on server computers throughout the world.

Each page will usually contain text, some type of multimedia offerings such as graphic images, video, or audio, and possible hypertext links to other documents. A browser allows an user to read the pages and interact with the choices associated with it. The browser is a graphical software program that sends commands to the Internet Web site and displays whatever information is available on the page. Various browser programs are commercially available from different manufacturers.

The Internet network employs methods designed to handle thousands of general purpose computers sharing a single cable, and therefore has no ability to differentiate traffic in terms of its purpose or the criticality of its data. The Internet is no longer a network of computers sharing a single cable, but rather a web of interconnected point to point links involving both general purpose stations and specialized infrastructure components such as routers and firewalls.

The type of personal computer or work station used by the end user to connect to the Web is of no regard. Communication over the Internet and other networks requires one of several types of protocols. Protocols such as Internet Protocol (IP) provide for file transfers, electronic mail, and other services.

A Sun Microsystem's programming language known as Java, along with Hyper Text Markup Language (HTML) used in designing layouts and graphics for a Web site or page has extended Internet technology such that a Web site can be used for dynamic applications, commonly called applets, that can be downloaded and run by the end user.

These applets are interpreted and run within a Web browser and have been generally restricted to word processing and similar uses. Downloading and running applets can be slow in comparison to other types of complied languages. Security rules imposed on a browser and enforced by the underlying JAVA language prevent applets from obtaining certain data from any other device other than the Web server itself.

Programmable logic controllers are widely used in industry and process control. Many manufacturers provide factory automation information using Microsoft Windows and other types of communication networking environments. These networks are usually slow, are not universally accessible and are limited to monitoring and data exchange.

Control may be implemented, but since the communication networks are non-deterministic, control is not real time. Specialized industrial networks using proprietary fieldbus alternatives can be very expensive. Conversion products are required to allow information carried over those networks to be visible on a general purpose network. There are significant installation and other deployment costs associated with the existence of such intermediate devices. Firewalls between the Web server and the application are designed to solve problems of security and are not designed for high performance.

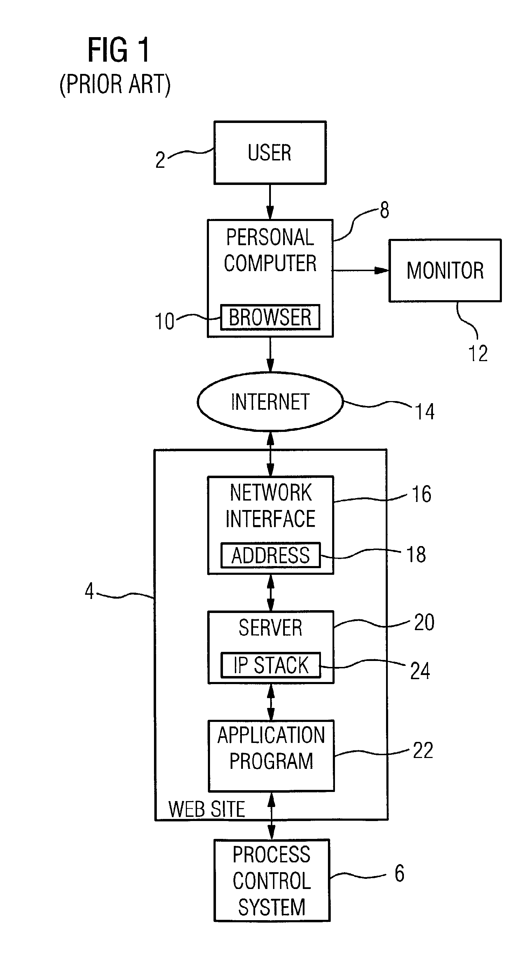

From US 6,061,603 an interface between an industrial control system and a web browser is known. This prior art system is explained by making reference to FIG. 1.

FIG. 1 shows an overview block diagram of a typical system illustrating the relationship between an user 2 at a remote location and an Internet web site 4 used for monitoring a process control system 6. The user 2 will have a personal computer (PC) 8 having a commercially available browser 10, such as Netscape Communication's Navigator or Microsoft's Internet Explorer, installed for viewing the contents at the web site 4 by a monitor 12.

The PC provides a remote human-machine interface (HMI) to the process control system 6. Various interconnection services are readily available to provide the physical and electrical interconnection from the PC to the Internet 14 itself. The Internet 14 is a collection of independent world wide communication networks that are interconnected to each other and function as a single connectionless entity.

Communication is based on a client-server basis, using a number of established protocols that allow for communication and file transfers between the client and the server. The most widely used protocol is Internet Protocol (IP).

The web site 4 includes a network interface 16 having an unique Internet address 18, a server 20, and an application program 22. The server 20 acts as the HTTP interpreter which uses TCP in conjunction with IP, through TCP/IP stack 24 to interact with the network interface 16 and the application program 22.

This enables the data transfer between the application program 22 and the user 2 through the Internet 14. The application program provides data from the process control system 6. This data can be used to monitor the control process by the user 2 at the remote location. The TCP/IP stack 24 enables data transfers over the Internet 14 between the user 2 and the web site 4 as required for the various layers specified by the IP protocol.

The user 2 can connect to the Internet 14 using one of a number of Internet service providers and will enter the address of the Web site 4 when connected. The Web site 4 will display a home page which may contain text, some type of multimedia offerings such as graphic images, video, or audio, and possible hypertext links to other documents.

The browser 10 will allow the user 2 to read the page and interact with the choices associated with it. The browser 10 will send commands to the Web site 4 which will use the application program 22 to display whatever information is available from the process control system 6. The browser 10 functions as a remote human-machine interface or HMI control of the process control system as will be detailed below.

A common disadvantage of prior art systems of the above illustrated type is that a data refresh operation typically requires reloading of the entire document and is therefore inefficient in terms of the required bandwidth.

### Summary of the invention

It is therefore an object of the present invention to provide for an improved method for data refreshing as well as a corresponding computer program product and a server computer.

The underlying problem of the invention is solved basically by applying the features laid down in the independent claims. Preferred embodiments of the invention are given in the dependent claims.

The present invention is particularly advantageous in a process control system. Typically there are many different kinds of data types in a process control system having a large variety of change rates and bandwidth requirements.

The invention allows to efficiently refresh the data of a document which is loaded on a client computer in such a heterogeneous environment. In particular the invention enables to make efficient usage of the available bandwidth in the communication between the server computer and the client computer.

In essence this is accomplished by generating a client script code by the server in response to new data. The new data and the client script code are placed in a hidden frame. When the timeout associated to the hidden frame is expired on the client computer, this is sent back to the client such that the script code contained in the hidden frame is executed by the browser program of the client computer. This way the document which is loaded on the client computer is updated.

One of the advantages of this technique is that it is not necessary to calibrate a polling rate. In particular the invention avoids the waste of bandwidth which is caused by too fast polling causing useless network workloads and it also avoids overloading the server with lots of requests. At the same time the invention enables a very short latency time between the reception of the new data by the client and the display of the new data on the client computer.

In accordance with a preferred embodiment of the invention the new data to be provided to the client computer is differentially coded based on the current data, i.e. the data which had been provided to the client computer previously. This further optimises the usage of the available network capacity.

It is a further advantage of the invention that it can be implemented on the server side without requiring any change on the side of the client computer. In fact a standard browser program can be used on the client computer for implementation of the present invention.

In accordance with a further preferred embodiment of the invention Microsoft ® active server pages (ASP) is used for implementation of the server side functionality. ASP is a server side scripting environment that can be used to create interactive web pages and build web applications.

When the server computer receives a request for an ASP file, it processes server side scripts contained in the file to build the web page that is sent to the browser. In addition to server side scripts, ASP files can contain HTML documents, including related client side scripts, as well as calls to COM components that perform a variety of tasks, such as connecting to a database. For more information on ASP reference is made to
HTTP://msdn.microsoft.com/library/default.asp.

In order to create an ASP application ASP script files are created. ASP script files contain plain text files comprising a combination of standard HTML code and script commands. While web servers normally send HTML files directly to the client's web browser in response to HTTP requests, IIS (Microsoft ® Internet Information Server) first processes the content of ASP scripts before sending output to clients. Within an ASP script standard HTML code is sent directly to the browser, while script commands are executed locally on the web server.

It is a further advantage of the invention that the server script and the hidden frame can be added automatically to a mark-up language document after it has been created. For example first the mark-up language document is created in the standard way such as by using Microsoft ® front page.

The server script code and the hidden frame are added automatically to the document in order to create an ASP file. The creation of a hidden frame is as such known from the prior art. One way of doing this is to set a frame to fill 100% of the browser for creation of the main frame and to set the hidden frame to fill the rest, i.e. 0%. This way a frame is created which is invisible on the client side.

### Brief description of the drawings

- Figure 1: shows an overview block diagram of a typical prior art system illustrating the relation ship between a user at the remote location and an internet web site used for monitoring a process control system,
- Figure 2: shows a block diagram of a process control system having an active server page (ASP) file in accordance with the present invention,
- Figure 3: is illustrative of a flow chart of an embodiment of the method of the present invention.

### Detailed description

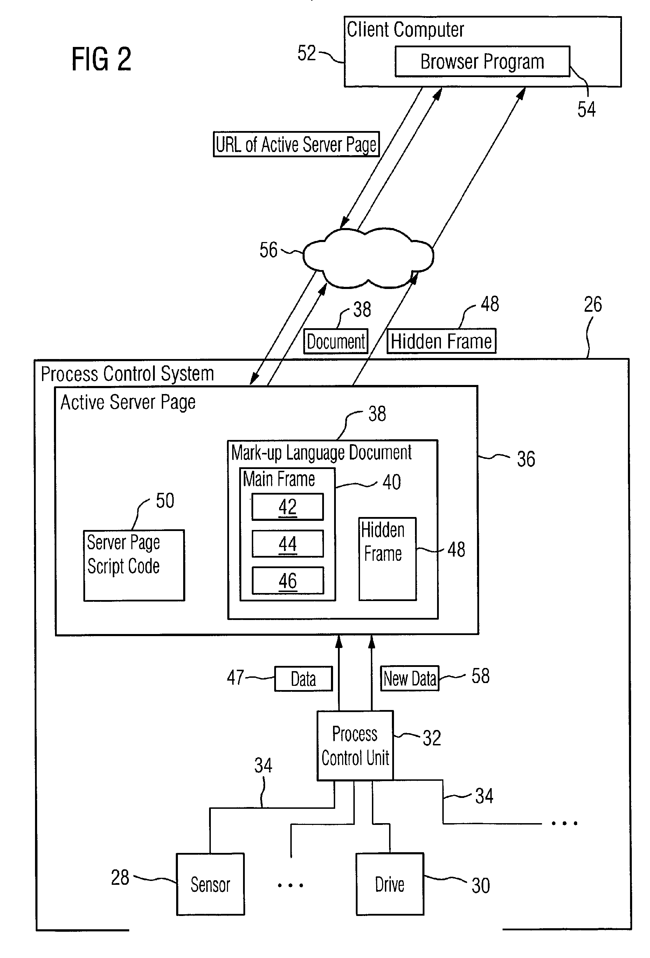

Figure 2 shows a block diagram of a process control system to which a client computer is connected.

The process control system 26 contains a variety of components such as sensors 28, intelligent drives 30 and other components which are typical for an automation system. These components are connected to process control unit 32 by means of fieldbus 34.

The process control unit 32 is connected to a server computer having an active server page file 36. The active server page (ASP) file 36 contains a mark-up language document 38, such as an HTML document. The document 38 has a main frame 40 containing data fields 42, data entry fields 44 and graphic objects 46.

For example each of the data fields 42 serves to display a specific kind of data, such as data delivered by one of the sensors 28. In addition a data entry field allows a user to overwrite such a data value in order to enter a new value. An example for a graphic object 46 is a slider. The slider position is determined by a specific data value acquired from the process.

Further the document 38 contains a hidden frame 48. The ASP file 36 has a server page script code 50 for execution by the server computer.

A client computer 52 has a browser program 54 and is coupled via network 56 to the process control system 26. The network 56 is a computer network, such as the Internet or an intranet.

In operation the user of the client computer 52 inputs the uniform resource locator (URL) of the ASP file 36 in its browser program 54. When the server computer receives the corresponding HTTP request from the client computer 52, the server page script code 50 is started in order to fill the data fields 42 and the data entry fields 44 with the current data which has been provided from the process control unit 32 as well as to set the graphic objects 46 to the positions corresponding to the current data.

The document 38 is sent from the server computer to the client computer 52 via the network 56. The document 38 is displayed on a monitor connected to client computer 52 by means of the browser program 54.

When new data from one of the components of the process control system 26 is provided to the ASP file 36 from the process control unit 32 the server page script code 50 is invoked. The server page script code 50 automatically generates client script code and places the client script coded together with the new data 58 into hidden frame 48.

When the hidden frame 48 is expired, then the new one is downloaded from the server computer of the process control system 26 to the client computer 52 via the network 56. When the client computer 52 receives the hidden frame 48 the client script contained in the hidden frame is executed by the browser program 54 and the new data which is also contained in the hidden frame 48 is processed in order to update the document 38 which is loaded on the client computer 52.

As an alternative to transmit the new data 58 within hidden frame 48 it is also possible to differentially code the new data 58 by means of the server page script code 50 and to transmit the differentially coded new data 58 by means of the hidden frame 48.

In this case the client script code unpacks the differentially coded new data 58. The differential encoding of the new data 58 is performed by the server page script code 50 for example by calculating the difference between the new data 58 and the data which is currently loaded on the client computer 52.

This has the advantage that only a minimum amount of data needs to be transmitted from the process control system 26 to the client computer 52 in order to update the document loaded on the client computer 52. This minimizes the network load. Another advantage is that the update is performed with a minimum latency time.

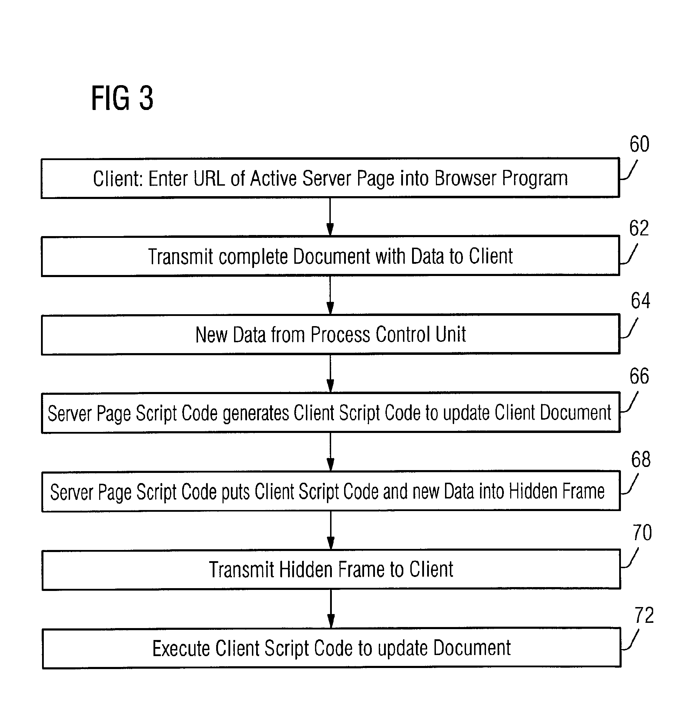

Figure 3 shows a corresponding flow chart: In step 60 the URL of the Active Server Page file is entered into the browser program. In response the complete HTML document contained in the active server page file with the current data is transmitted to the client and displayed by means of the client's browser program.

In step 64 new data is provided by the process control unit. The new data is to replace the data which is currently displayed in one or more of the data fields, data entry fields or graphic objects in the document loaded on the client computer. When the new data is received a server page script code is started automatically.

The server page script code generates client script code in order to update the client document. The generation of the client script code is done in step 66.
The server page script code places the client script code and the new data into a hidden frame. Alternatively the new data is coded differentially.

In step 70 the hidden frame is transmitted to the client. In step 72 the client script code which is contained in the hidden frame is executed in order to update the document on the client computer by means of the new data or the differentially encoded new data contained in the hidden frame.

In case the document contains activeX controls it is an option that the client script code is executed by invoking the activeX controls.

## Claims

1. A method of data refreshing of a mark-up language document (38) being loaded on a client computer (52), the method comprising the steps of:
- providing of new data (58) to a server computer, the server computer having a server script code (50),
- generating of client script code by the server script code,
- placing the script code and information being descriptive of the new data in a hidden frame (48),
- sending of the hidden frame to the client computer for execution of the client script code by the client computer in order to update the mark-up language document.

2. The method of claim 1, the mark-up language document containing the hidden frame.

3. The method of claim 1 or 2 the mark-up language document containing activeX controls, whereby the updating is to be performed by interoperation of the client script code and at least one of the activeX controls.

4. The method of claims 1, 2 or 3, whereby the mark-up language document is an HTML, DHTML or XML document.

5. The method of anyone of the preceding claims 1 to 4 further comprising differentially coding the new data based on the data which has been previously loaded to the client computer.

6. The method of anyone of the preceding claims 1 to 5, whereby the data and the new data is provided to the server computer from a process control unit (32).

7. A server computer program for performing the steps of:
- generating of client script code (50) in response to new data (58),
- placing the client script code and information descriptive of the new data in a hidden frame (48),
- sending the hidden frame to a client computer (52) for execution of the client script code by the client computer in order to update a mark-up language document which has been loaded on the client computer.

8. The computer program of claim 7 further comprising differentially coding the new data based on the current data loaded on the client computer.

9. The computer program of claim 7 or 8, the computer program being an active server page script code.

10. A server computer comprising:
- server script code means (50) for generating of client script code,
- means (36) for placing of the client script code and information descriptive of the new data in a hidden frame (48),
- means (36) for sending of the hidden frame to the client computer for executing of the client script code in order to update a mark-up language document, which has been loaded on the client computer.

11. The server computer of claim 10 further comprising means (50) for differentially coding the new data based on the current data being loaded on the client computer.

12. The server computer of claim 10 or 11, the server computer being a component of a process control system (26).
